# EUROPEAN PATENT SPECIFICATION

(11) **EP 2 765 310 B1**
(45) Date of publication and mention of the grant of the patent: **23.05.2018**
(21) Application number: 13154494.2
(22) Date of filing: 07.02.2013
(51) Int. Cl.: F04B 19/02, F01B 15/04

(54) **Rocking cylinder assembly**
Oszillierende Zylinderanordnung
Ensemble de cylindre oscillant

(43) Date of publication of application: 13.08.2014
(73) Proprietor: Artemis Intelligent Power Limited, Loanhead, Midlothian EH20 9TB (GB); Mitsubishi Heavy Industries, Ltd., Tokyo 108-8215 (JP)
(72) Inventor: Rampen, Alex, Midlothian, EH20 9TB (GB); Voller, Gordon, Midlothian, EH20 9TB (GB); Lavender, Jack, Midlothian, EH20 9TB (GB); Stein, Uwe, Midlothian, EH20 9TB (GB)
(74) Representative: Hindles Limited

(56) References cited:
- EP-A1- 0 476 367
- DE-C- 969 120
- US-A- 398 143
- US-A- 430 555
- US-A1- 2004 182 333
- US-A1- 2006 054 114

## Description

### Field of the invention

The invention relates to a rocking cylinder assembly, a method of operating a rocking cylinder assembly, a machine comprising a rocking cylinder assembly, a bearing component for a rocking cylinder assembly and a cylinder for a rocking cylinder assembly.

### Background to the invention

The term "rocking cylinder assembly" is used throughout the specification to refer to a cylinder assembly comprising a cylinder which is rotatable (e.g. rotatably mounted so that it can rotate) about a rocking axis.

Rocking cylinder assemblies typically comprise a piston (typically driven by a crankshaft) reciprocating within a cylinder such that, when the piston reciprocates within the cylinder, the cylinder rotates about a rocking axis periodically between first and second end positions. The cylinder typically comprises a bore terminating at a cylinder bearing surface, the line of intersection between the bore and the bearing surface defining a circular cylinder aperture through which fluid can flow into/out of the cylinder. The cylinder bearing surface typically bears against a bearing surface of a bearing component comprising a bearing component bore terminating at the bearing surface of the bearing component. A line of intersection between the bore and bearing surface of the bearing component defines a circular aperture through which fluid can flow through the bearing component. As the cylinder rotates between the first and second end positions, the cylinder bearing surface bears against the bearing surface of the bearing component, while the cylinder and bearing component apertures remain in fluid communication.

In order to improve the performance of a machine comprising such a rocking cylinder assembly, it is typically desirable to increase the fluid flow area through the bearing component and/or cylinder apertures. However, the minimum diameter of the cylinder aperture is typically set such that there is no overlap between the cylinder bearing surface and the bearing component aperture throughout the entire sweep of the cylinder between the first and second end positions. Overlap is undesirable because the size of the swept area of the bearing surface of the bearing component is reduced (since part of the cylinder bearing surface no longer bears against the component bearing surface during the overlap) leading to reduced load capacity and rapid wear at the interface between the part of the cylinder surface that bears against the component bearing surface and the component bearing surface. In addition, the overlapping portion of the cylinder aperture may offer a sharp lip to the fluid flow, causing flow separation and creating non-laminar flow, vortices and/or stagnant regions. The flow is also constricted periodically by the overlap, while there may also be a reduction in hydrostatic clamping force. All of these factors lead to instability and unpredictable effects. Accordingly, increasing the size of the component aperture typically requires a corresponding increase in the size of the cylinder aperture, and thus of the diameter of the cylinder as a whole, and of the size of the machine.

One way of improving the flow rate through the cylinder and component apertures is to change the bore to stroke ratio (e.g. to increase the ratio of the width of the cylinder bore to the length of the stroke of the piston). However, this would significantly increase the bearing load on the bearing surfaces of the crankshaft and hence the bending stress on the crankshaft. Also, this would lead to longer sealing lines which may lead to increased fluid leakage. In any event, the bore to stroke ratio is typically chosen to optimise various factors such as weight, efficiency, cost and fixed operating speeds (e.g. fixed operating speeds of the crankshaft). Accordingly, it may not be possible to alter the bore to stroke ratio without significantly affecting other features of the design.

The invention relates to a rocking cylinder assembly which allows an increased fluid flow rate through the combination of the bearing component and the cylinder for a given size of cylinder.

US430,555 describes an oscillating steam engine comprising three cylinders and a base having three concave seats. Each of the concave seats has two ports communicating respectively with a steam chamber and an exhaust chamber. Each cylinder receives at its lower end a valve having a convex bearing surface and a single port. Initially the valve-ports register with the steam ports of the seats. Steam then enters the lower ends of the cylinders forcing pistons in an upward direction and actuating a crankshaft, thereby causing the cylinders to oscillate until the pistons reach the upper end of their stroke, where the valve ports register with the exhaust ports. US398,143 describes a further steam engine comprising a rocking cylinder and a bearing component having the features as defined in the preamble of claim 1.

US2004/182333 describes a moving cylinder assembly including a cylinder having a chamber for receiving and engaging a piston, and a housing immediately embracing the cylinder and defining a slot through which the piston is positioned to allow for oscillating movement of the piston within the slot. The cylinder engages in reciprocal oscillating movement with the piston. The immediate embracement of the cylinder by the housing minimises leakage between the cylinder and the housing.

### Summary of the invention

A first aspect of the invention provides a rocking cylinder assembly comprising: a cylinder having a cylinder bore terminating at a cylinder bearing surface and a cylinder aperture defined by a line of intersection between the cylinder bore and the cylinder bearing surface, the cylinder being rotatable about a rocking axis between first and second end positions; and a bearing component having a component bore terminating at a component bearing surface and a component aperture defined by a line of intersection between the component bore and the component bearing surface, the cylinder bearing surface bearing against the component bearing surface and the cylinder and component apertures being in fluid communication as the cylinder rotates between the first and second end positions, a first one of the cylinder and component apertures having a greater area than the second one of the cylinder and component apertures, the first one of the cylinder and component apertures defining a first fluid flow path having a first principal fluid (e.g. hydraulic liquid) flow axis along which fluid (e.g. hydraulic liquid) flows through the said first one of the apertures and a second one of the cylinder and component apertures defining a second fluid (e.g. hydraulic liquid) flow path having a second principal fluid flow axis along which fluid (e.g. hydraulic liquid) flows through the second one of the apertures, characterised in that the ratio of the area of the said second one of the apertures to the square of the maximum extent of the said second one of the apertures in a direction perpendicular to the rocking axis and perpendicular to the second principal fluid flow axis is greater than the ratio of the area of the said first one of the apertures to the square of the maximum extent of the said first one of the apertures in a direction perpendicular to the rocking axis and perpendicular to the first principal fluid flow axis, wherein the component bore comprises an axisymmetric portion which is axisymmetrical about the principal fluid flow axis along which fluid flows through the component aperture and a non-axisymmetric portion which is non-axisymmetric about the said principal fluid flow axis, the non-axisymmetric portion comprising the component aperture, and wherein a maximum length of the non-axisymmetrical portion of the component bore in a direction parallel to the said principal fluid flow axis is less than a maximum length of the axisymmetrical portion of the component bore in that direction.

The ratio of the area to the square of the maximum extent of an aperture in a direction perpendicular to the rocking axis and perpendicular to the its principal fluid flow axis is a unitless ratio which is independent of the actual size of the aperture. Accordingly, defining this ratio with respect to both apertures enables their shapes to be compared independently of size.

In the event that the first one of the apertures has a perfectly circular area, the said ratio of the area of the said first one of the apertures to the square of the maximum extent of the said first one of the apertures in a direction perpendicular to the rocking axis and perpendicular to the first principal fluid flow axis is equal to π/4 (πr²/(2r)²= π/4, where r is the radius of the circle). In this case, the said ratio of the area of the said second one of the apertures to the square of the maximum extent of the said second one of the apertures in a direction perpendicular to the rocking axis and perpendicular to the second principal fluid flow axis is typically greater than π/4. Put another way, in this case the said second one of the apertures typically has a greater area than a notional circular area having a diameter equal to the maximum extent of the said second one of the apertures in the said direction perpendicular to the rocking axis and perpendicular to the second principal fluid flow axis.

It will be understood that the cylinder aperture rotates about the rocking axis with the cylinder, but that the said maximum extent of the cylinder aperture in a direction perpendicular to the rocking axis typically remains perpendicular to the rocking axis as the cylinder rotates between the first and second end positions.

The principal fluid flow axis of the component aperture is typically perpendicular (and fixed relative) to the rocking axis. The principal fluid flow axis of the cylinder aperture typically rotates with the cylinder about the rocking axis.

It will be understood that the area of the cylinder aperture is the area of the cylinder aperture through which fluid can flow.

The cylinder aperture may lie on a single plane (the cylinder aperture may have a two dimensional shape). For a cylinder aperture which lies on a single plane, the area of the cylinder aperture may be a planar area of the cylinder aperture in a plane perpendicular to the principal fluid flow axis of the fluid flow path of the cylinder aperture.

It may be that the cylinder aperture does not lie on a single plane (the cylinder aperture may have a three dimensional shape). For example, the cylinder aperture may follow a curved path, such as a (e.g. concave or convex - see below) contour of the cylinder bearing surface. For a cylinder aperture which does not lie on a single plane (or even for a cylinder aperture which does lie on a single plane), the area of the cylinder aperture may be the area of a projection of the cylinder aperture along the principal fluid flow axis of the fluid flow path defined by the cylinder aperture onto a plane perpendicular to the said principal fluid flow axis.

It will also be understood that the area of the component aperture is the area of the component aperture through which fluid can flow.

The component aperture may lie on a single plane (the component aperture may have a two dimensional shape). For a component aperture which lies on a single plane, the area of the component aperture may be a planar area of the component aperture in a plane perpendicular to the principal fluid flow axis of the fluid flow path of the component aperture.

It may be that the component aperture does not lie on a single plane (the component aperture may have a three dimensional shape). For example, the component aperture may follow a curved path, such as a contour (e.g. concave or convex - see below) of the component bearing surface. For a component aperture which does not lie on a single plane (or even for a component aperture which does lie on a single plane), the area of the component aperture may be the area of a projection of the component aperture along the principal fluid flow axis of the fluid flow path defined by the component aperture onto a plane perpendicular to the said principal fluid flow axis.

It will be understood that, if the cylinder and/or component apertures lie on a single plane (the said aperture has a two dimensional shape), the maximum extents of the said aperture in the direction parallel and perpendicular to the rocking axis (and perpendicular to the principal fluid flow axis of the aperture) are each typically the lengths of respective straight lines extending in those directions between opposing edges of the respective aperture. It will also be understood that, if the cylinder and/or component apertures do not lie on a single plane (the aperture has a three dimensional shape), the maximum extents of the said aperture in the directions parallel and perpendicular to the rocking axis (and perpendicular to the principal fluid flow axis of the aperture) are each typically the lengths of respective straight lines extending in those directions between opposing edges of the area of the projection of the aperture along the principal fluid flow axis of the aperture onto a plane perpendicular to the said principal fluid flow axis.

It will also be understood that, if the cylinder and/or component apertures do not lie on a single plane (the said aperture has a three dimensional shape), references to the shape of the aperture are typically references to the shape of the projection of the aperture along the principal fluid flow axis of the aperture onto a plane perpendicular to the said principal fluid flow axis. This also typically applies to cylinder and/or component apertures which do lie on a single plane (apertures having a two dimensional shape).

Accordingly, that the first one of the cylinder and component apertures has a greater area than the second one of the cylinder and component apertures can typically be taken to mean that a projection of the first one of the apertures along the first principal fluid flow axis onto a plane perpendicular to the first principal fluid flow axis has an area which is greater than an area of a projection of the second one of the apertures along the second principal fluid flow axis onto a plane perpendicular to the second principal fluid flow axis. In this case, the ratio of the area of the said projection of the second one of the apertures to the square of the maximum extent of the said projection of the second one of the apertures in a direction perpendicular to the rocking axis and perpendicular to the second principal fluid flow axis is typically greater than the ratio of the area of the said projection of the first one of the apertures to the square of the maximum extent of the said projection of the first one of the apertures in a direction perpendicular to the rocking axis and perpendicular to the first principal fluid flow axis.

The area of the cylinder aperture may be greater than the area of the component aperture (in which case the cylinder aperture is the said first one of the apertures and the component aperture is the said second one of the apertures). In another embodiment, the area of the component aperture may be greater than the area of the cylinder aperture (in which case the component aperture is the said first one of the apertures and the cylinder aperture is the said second one of the apertures). The first one of the apertures may have a substantially circular shape. The second one of the apertures may have a (quasi-oval) substantially elliptical shape. The (shape of the) second one of the apertures is typically elongate (or at least more elongate than the first one of the apertures) in a direction parallel to the rocking axis. Preferably (at least part of, preferably the majority of, even more preferably all of) the second one of the apertures has a shape which conforms to (or at least approximates or is identical to) a shape defined by the overlapping portion of two notional intersecting ellipses, preferably forming a symmetric lens shape. The notional ellipses may be the respective top-down projections (as viewed along the second principal fluid flow axis) of the (tilted) first one of the apertures when the cylinder is at the first and second end positions respectively.

One of the component bearing surface and the cylinder bearing surface may be substantially convex and the other of the component bearing surface and the cylinder bearing surface may be substantially concave.

Typically the concave bearing surface terminates at the said second one of the said apertures and the convex bearing surface terminates at the said first one of the said apertures. That is, an edge of the concave bearing surface typically at least partially defines the said second one of the said apertures and an edge of the convex bearing surface typically at least partially defines the said first one of the apertures.

When the area of the cylinder aperture is greater than the area of the component aperture, the required size of the cylinder (and a machine comprising the rocking cylinder assembly) may be dependent on the maximum extent of the component aperture in the said direction perpendicular to the rocking axis and perpendicular to the principal fluid flow axis of the component aperture. By providing the component aperture with a ratio of its area to the square of its maximum extent in a direction perpendicular to the rocking axis and perpendicular to the principal fluid flow axis of the component aperture which is greater than the ratio of area of the cylinder aperture to the square of its maximum extent in a direction perpendicular to the rocking axis and perpendicular to the principal fluid flow axis of the cylinder aperture, the flow capacity through the component aperture is increased for a given size of cylinder without introducing overlap/overrun between the cylinder and the component aperture as the cylinder rotates between the first and second positions. In this embodiment, the component bearing surface is typically substantially concave, while the cylinder bearing surface is typically substantially convex.

Alternatively, when the area of the component aperture is greater than the area of the cylinder aperture, the required size of the component (and a machine comprising the rocking cylinder assembly) may be dependent on the maximum extent of the cylinder aperture in a direction perpendicular to the rocking axis and perpendicular to the principal fluid flow axis of the cylinder aperture. Accordingly, by providing the cylinder aperture with a ratio of its area to the square of its maximum extent in a direction perpendicular to the rocking axis and perpendicular to the principal fluid flow axis of the cylinder aperture greater than the ratio of the area of the component aperture to the square of its maximum extent in a direction perpendicular to rocking axis and perpendicular to the principal fluid flow axis of the component aperture, the flow capacity through the cylinder aperture is increased for a given size of component without introducing overlap/overrun between the component and the cylinder aperture as the cylinder rotates between the first and second positions. In this embodiment, the cylinder bearing surface is typically substantially concave, while the component bearing surface is typically substantially convex.

Preferably, where the first one of the apertures is the cylinder aperture, there is no overrun/overlap between the cylinder and the component aperture in either the first or the second positions or therebetween. Preferably, where the first one of the apertures is the component aperture, there is no overrun/overlap between the component and the cylinder aperture in either the first or the second positions or therebetween.

Because the invention provides an increased flow area through the combination of the cylinder and component apertures, it is particularly suited to machines required to maintain high efficiency at high speeds while idling, pumping or motoring. Preferably the peak fluid flow speed through the cylinder and component apertures is below 10m/s, more preferably below 5m/s (but typically greater than 0.1m/s). The rocking cylinder assembly of the invention may therefore be particularly suitable for use in larger applications, and helps to improve fill speed and volumetric efficiency at high speeds.

Typically, the rocking cylinder assembly is suitable for use with hydraulic liquid (the fluid communication between the cylinder and component apertures being hydraulic liquid communication).

In some embodiments, at least a portion of the shape of the said second one of the apertures extends beyond a notional circular area in a direction parallel to the rocking axis (and perpendicular to the second principal fluid flow axis), the notional circular area being concentric and co-planar with the shape of the said aperture and having a diameter equal to the maximum extent of the said aperture in a direction perpendicular to the rocking axis and perpendicular to the said second principal fluid flow axis. Typically, the area of the said second one of the apertures covers the entire notional circular area.

The cylinder typically rotates periodically between the first and second end positions. At the first end position, the cylinder is typically rotated in a first rotational sense about the rocking axis by a first extent from an intermediate third position (typically mid-way) between the first and second end positions. At the second end position, the cylinder is typically rotated in a second rotational sense opposite the first rotational sense about the rocking axis by a second extent from the intermediate third position. Typically the total sweep between the first and second positions is approximately 18°.

The cylinder bore may have a first inner diameter and a second inner diameter less than the first inner diameter, the said cylinder aperture having a diameter equal to the second inner diameter. Typically a transition region (e.g. a step or tapered region) is provided between the first and second inner diameters.

Typically, the fluid communication between the component bore and the cylinder bore is direct fluid communication. That is, fluid can flow between the component and cylinder bores without any further components or apertures being provided between the component and cylinder bores.

Typically the bearing component does not rotate about the rocking axis. That is, when the cylinder rotates about the rocking axis, the position of the component typically stays fixed with respect to the rocking axis.

Typically, the cylinder can rotate about the rocking axis but not along rocking axis.

Typically the cylinder and/or component apertures have at least partly (preferably substantially) curved perimeters.

The bearing component may be a separate component from a or the machine (e.g. internal combustion engine) in which the rocking cylinder assembly is provided. Alternatively the bearing component may be integrally formed with a machine in which the rocking cylinder assembly is provided. In some embodiments, the bearing component is integrally formed with a valve body of a valve of the machine in which the rocking cylinder assembly is provided.

Typically, the cylinder is rotatably mounted such that it can be rotated about the rocking axis by, for example, an eccentric of a crankshaft. The crankshaft may be provided as part of the rocking cylinder assembly, the eccentric of the crankshaft being configured to periodically rotate the cylinder about the rocking axis between the first and second positions as it rotates. The axis of rotation of the crankshaft is typically parallel to the rocking axis.

Typically, the ratio of the maximum extent of the said second one of the apertures in a direction parallel to the rocking axis to the maximum extent of the said second one of the apertures in a direction perpendicular to the rocking axis and perpendicular to the second fluid flow axis is greater than the ratio of the maximum extent of the said first one of the apertures in a direction parallel to the rocking axis to the maximum extent of the said first one of the apertures in a direction perpendicular to the rocking axis and perpendicular to the first fluid flow axis.

The cylinder bearing surface may be part-spherical, or part-spheroidal.

A piston may be provided which reciprocates within the cylinder. The inner volume of the cylinder between the piston and the cylinder aperture forms a working chamber of cyclically varying volume as the piston reciprocates therein. The piston may have a circular axial cross section (i.e. taken through a longitudinal axis of the piston).

The piston may further comprise a piston foot in communication with a or the crankshaft. The piston foot may have a part-cylinder shape which constrains the degree of freedom of the cylinder to rotation about the rocking axis.

The cylinder bearing surface may be a part-cylinder, in which case the degree of freedom of the cylinder may additionally or alternatively be constrained to rotation about the rocking axis by the interaction between the cylindrical bearing surface and the bearing surface of the bearing component.

The cylinder bearing surface may have an axial cross section (i.e. taken through the longitudinal axis of the cylinder) having a substantially circular shape. Alternatively, the cylinder bearing surface may have a substantially elliptical cross section (again taken through the longitudinal axis of the cylinder), the elliptical cross section having an elongate dimension parallel to the rocking axis.

If the area of the cylinder aperture is greater than the area of the component aperture, (at least part of, preferably the majority of, even more preferably all of) the component aperture typically conforms to (or at least approximates or is identical to) a boundary between an area of the component bearing surface swept by the cylinder bearing surface as the cylinder rotates between the first and second end positions and an area of the component bearing surface unswept by the cylinder bearing surface as the cylinder rotates between the first and second end positions. If the area of the component aperture is greater than the area of the cylinder aperture, (at least part of, preferably the majority of, even more preferably all of) the cylinder aperture typically conforms to (or at least approximates or is identical to) a boundary between an area of the cylinder bearing surface swept by the component bearing surface as the cylinder rotates between the first and second end positions and an area of the cylinder bearing surface unswept by the component bearing surface as the cylinder rotates between the first and second end positions.

Thus, (at least part of, preferably the majority of, even more preferably all of) the said second one of the apertures may have a shape which conforms to or at least approximates, or is substantially identical to, the boundary between swept and unswept areas.

Typically the boundary is an inner boundary (e.g. if there are two boundaries between swept and unswept areas of the said bearing surface, the boundary covered by the first one of the said apertures as the cylinder rotates between the first and second end positions, which is typically closer to a notional apex of a concave or convex portion of the bearing surface of the bearing component or cylinder respectively).

Typically, the said first one of the apertures is circular.

At least part of, preferably the majority of, even more preferably all of the shape of the second one of the apertures may conform to (or at least approximate or be) an elliptical, quasi-oval or vesica piscis shape.

The vesica piscis shape is more easily manufactured than the (in some embodiments more optimal) shape formed by two intersecting ellipses described above.

The shape of the second one of the apertures may be symmetrical about a line parallel to the rocking axis.

A shape retaining cross-brace may extend across the said second one of the apertures (typically between opposing portions of the said second one of the apertures). Typically the cross-brace extends between two opposite portions of the perimeter of the second one of the apertures. Typically, the cross-brace extends in a direction perpendicular to the rocking axis and perpendicular to the second fluid flow axis. Preferably the cross-brace extends across the maximum extent of the second one of the apertures in a direction perpendicular to the rocking axis and perpendicular to the second fluid flow axis.

The cross-brace is typically configured to retain the shape of the said second one of the apertures to counteract expansion forces exerted on the second one of the apertures by pressurised fluid flowing through it.

The cross-brace may comprise one or more support arms. In one embodiment, the cross-brace may comprise a plurality of support arms extending radially inwards from a perimeter of the said second one of the apertures to a mount provided in the said second one of the apertures (e.g. at the centre of the said second one of the apertures).

Where a cross-brace is provided, the area of the second one of the apertures may be the sum of the areas of the aperture not occupied by the cross brace. That is, the area of the second one of the apertures is (as above) the area of the second one of the apertures through which fluid can flow. Where the second one of the apertures does not lie on a single plane (the second one of the apertures has a three dimensional shape) the area of the second one of the apertures is typically the sum of the projection of the areas of the aperture not occupied by the cross brace (through which fluid can flow) along the principal fluid flow axis of the aperture onto a plane perpendicular to the said principal fluid flow axis.

The bearing component may incorporate or support a flow hat arranged with respect to a valve member of a valve so that fluid flowing towards the flow hat is diverted around the flow hat to thereby reduce one or more forces which would otherwise act on the valve member as a result of the flow of fluid to urge the valve member towards a valve seat of the valve (see published European patent publication no. EP2370717). The flow hat may be integrated with the mount and/or the support arms of the cross brace. In one embodiment, a poppet rod of a (or the) poppet valve may extend axially (i.e. parallel to or along the principal fluid flow axis through the component aperture) from the mount into the cylinder through the cylinder aperture.

Particularly when the component aperture is the said second one of the apertures, the component may comprise a non-axisymmetrical portion which is non-axisymmetrical about the second principal fluid flow axis, the non-axisymmetrical portion comprising the component aperture. The non-axisymmetrical portion may have parallel opposing inner walls. The component bore may further comprise an axisymmetrical portion which is axisymmetrical about the principal fluid flow axis along which fluid flows through the component bore. The axisymmetrical portion is typically integrally formed with the non-axisymmetrical portion.

Working fluid flowing through the rocking cylinder assembly may be highly pressurised, and this pressurised fluid causes loading of the components of the assembly, including the component bore. The axisymmetrical portion of the component bore will be deflected symmetrically about the principal fluid flow axis along which fluid flows through the component aperture (and loaded evenly). However, the non-axisymmetrical portion of the component bore will deflect non-axisymmetrically about the principal fluid flow axis along which fluid flows through the component aperture (and thus loaded unevenly). It is desirable to minimise this non-axisymmetrical deflection. Therefore, the maximum length of the non-axisymmetrical portion of the component in the direction parallel to the principal fluid flow axis through which fluid flows through the component aperture is preferably less than the maximum length of the axisymmetrical portion of the component in that direction (preferably less than half of the maximum length of the axisymmetrical portion of the component in that direction).

By minimising the length of the non-axisymmetrical region in the direction parallel to the principal fluid flow axis through which fluid flows through the component aperture, relative to that of the axisymmetric region, the non-axisymmetrical deflection acting on the component is correspondingly reduced and the axisymmetric deflection of the component core are correspondingly increased. Thus, expansion forces exerted by pressurised fluid on the inner walls of the component bore are more evenly distributed and lead to a more uniform deformation. Accordingly, in this case, there is typically no (or at least less) need for a shape retaining cross-brace to be provided in order to prevent deformation of the component aperture. When a shape-retaining cross-brace is provided, it is not typically possible to harden (or to fully harden) the bearing component without also hardening the cross-brace. Because the cross-brace is thin, hardening causes it to become brittle/weak. Accordingly, the component does not tend to be hardened (or fully hardened) to avoid weakening the cross-brace. By omitting a web brace, the component can be (fully) hardened thereby increasing its durability.

In some embodiments, at least a portion of the component bore has a cross sectional shape perpendicular to the principal fluid flow axis along which fluid flows through the component aperture and at least a portion of the cylinder bore has a cross sectional shape perpendicular to the principal fluid flow axis along which fluid flows through the cylinder aperture, wherein the said cross sectional shape of the component bore substantially matches the cross sectional shape of the cylinder bore.

Typically the size of the said cross sectional shape of the component bore also substantially matches the size of the cross sectional shape of the cylinder bore.

Typically the said at least a portion of the component bore is adjacent to the component aperture.

Typically the said at least a portion of the cylinder bore is adjacent to the cylinder aperture.

By matching the shape (and typically the size) of the component bore cross section with the shape (and typically size) of the cylinder bore cross section, the deformation caused by the forces on an inner surface of the component bore adjacent to the component aperture will (at least substantially) match the deformation caused by the forces on an inner surface of the cylinder bore adjacent to the component aperture (it will be understood that the component bore adjacent to the component aperture and the cylinder bore adjacent to the cylinder aperture are axially separated from each other along principal fluid flow axis of the component aperture). This means that any deformation of the said portion of the component bore will substantially match any deformation of the said portion of the cylinder bore, leading to improved conformity between the cylinder and component bearing surfaces throughout the lifetime of the rocking cylinder assembly (which lifetime will be increased accordingly).

The said portion of the cylinder bore may be non-axisymmetric about the principal fluid flow axis of the cylinder aperture. The said portion of the component bore may be non-axisymmetric about the principal fluid flow axis of the component aperture.

Typically, the cylinder and bearing component apertures remain in fluid communication between the first and second positions of the cylinder.

A second aspect of the invention provides a method of operating a rocking cylinder assembly comprising: a cylinder having a cylinder bore terminating at a cylinder bearing surface and a cylinder aperture defined by a line of intersection between the cylinder bore and the cylinder bearing surface, the cylinder being rotatable about a rocking axis between first and second end positions; a bearing component having a component bore terminating at a component bearing surface and a component aperture defined by a line of intersection between the component bore and the component bearing surface, a first one of the cylinder and component apertures having a greater area than the second one of the cylinder and component apertures, the first one of the cylinder and component apertures defining a first fluid flow path having a first principal fluid flow axis along which fluid flows through the said first one of the apertures and a second one of the cylinder and component apertures defining a second fluid flow path having a second principal fluid flow axis along which fluid flows through the second one of the apertures, the ratio of the area of the said second one of the apertures to the square of the maximum extent of the said second one of the apertures in a direction perpendicular to the rocking axis and perpendicular to the second principal fluid flow axis being greater than the ratio of the area of the said first one of the apertures to the square of the maximum extent of the said first one of the apertures in a direction perpendicular to the rocking axis and perpendicular to the first principal fluid flow axis, wherein the component bore comprises an axisymmetric portion which is axisymmetrical about the principal fluid flow axis along which fluid flows through the component aperture and a non-axisymmetric portion which is non-axisymmetric about the said principal fluid flow axis, the non-axisymmetric portion comprising the component aperture, and wherein a maximum length of the non-axisymmetrical portion of the component bore in a direction parallel to the said principal fluid flow axis is less than a maximum length of the axisymmetrical portion of the component bore in that direction, the method comprising: rotating the cylinder between the first and second positions; bearing the cylinder bearing surface against the component bearing surface as the cylinder rotates between the first and second positions such that the cylinder and bearing component apertures are in fluid communication as the cylinder rotates between the first and second positions; and flowing fluid between the cylinder and bearing component apertures.

Typically, the fluid flowing between the cylinder and bearing component apertures is a hydraulic liquid.

Typically, the cylinder and bearing component apertures remain in fluid communication between the first and second positions.

A third aspect of the invention provides a bearing component for a rocking cylinder assembly according to the first aspect of the invention, the bearing component comprising a bearing surface and a component bore terminating at the bearing surface such that a line of intersection between the bore and the bearing surface defines an aperture through which fluid can flow, characterised in that the area of a projection of the aperture along a longitudinal axis of the bore onto a plane perpendicular to the longitudinal axis extends beyond a notional circular area being concentric and co-planar with the said projected aperture area, and having a diameter equal to the length of, and being co-linear with, the straight line of shortest length extending between opposing sides of the said projected aperture area through the centre of the said area, wherein the component bore comprises an axisymmetric portion which is axisymmetrical about the principal fluid flow axis along which fluid flows through the component aperture and a non-axisymmetric portion which is non-axisymmetric about the said principal fluid flow axis, the non-axisymmetric portion comprising the component aperture, and wherein a maximum length of the non-axisymmetrical portion of the component bore in a direction parallel to the said principal fluid flow axis is less than a maximum length of the axisymmetrical portion of the component bore in that direction.

Typically, the ratio of the maximum extent of the said area in a first direction (typically co-linear with the straight line of shortest length extending between opposing sides of the said area through the centre of the said area) to the maximum extent of the aperture in a second direction perpendicular to the first direction is less than 1.00.

Typically, the said area of the projection of the aperture along the longitudinal axis of the bore onto the plane perpendicular to the longitudinal axis covers the entire notional circular area.

Typically the said area of the projection of the aperture along the longitudinal axis of the bore onto the plane perpendicular to the longitudinal axis is greater than the said circular area.

A fourth aspect of the invention provides a cylinder for a rocking cylinder assembly, the cylinder comprising a bearing surface and a cylinder bore terminating at the bearing surface such that a line of intersection between the bore and the bearing surface defines an aperture through which fluid can flow, characterised in that the area of a projection of the aperture along a longitudinal axis of the bore onto a plane perpendicular to the longitudinal axis extends beyond a notional circular area being concentric and co-planar with the said projected aperture area, and having a diameter equal to the length of, and being co-linear with, the straight line of shortest length extending between opposing sides of the said projected aperture area through the centre of the said area.

Typically, the ratio of the maximum extent of the aperture in a first direction (typically co-linear with the straight line of shortest length extending between opposing sides of the said area through the centre of the said area) to the maximum extent of the aperture in a second direction perpendicular to the first direction is less than 1.00.

Typically, the said area of the projection of the aperture along the longitudinal axis of the bore onto the plane perpendicular to the longitudinal axis covers the entire notional circular area.

Typically the said area of the projection of the aperture along the longitudinal axis of the bore onto the plane perpendicular to the longitudinal axis is greater than the said circular area.

The preferred and optional features discussed above are preferred and optional features of each aspect of the invention to which they are applicable. For the avoidance of doubt, the preferred and optional features of the first aspect of the invention may also be preferred and optional features in relation to the second, third and fourth aspects of the invention, where applicable.

### Description of the Drawings

An example embodiment of the present invention will now be illustrated with reference to the following Figures in which:
Figure 1 is a side sectional view of a rocking cylinder assembly;
Figure 2 is a perspective sectional view of the rocking cylinder assembly of Figure 1;
Figure 3 is a perspective sectional view of the bearing component of the cylinder assembly of Figures 1 and 2;
Figure 4 is a top-down view of the bearing component of the cylinder assembly shown in Figures 1 and 2;
Figure 5 is perspective sectional view of an alternative bearing component; and
Figure 6 is a top-down view of the alternative bearing component of Figure 5.

### Detailed Description of an Example Embodiment

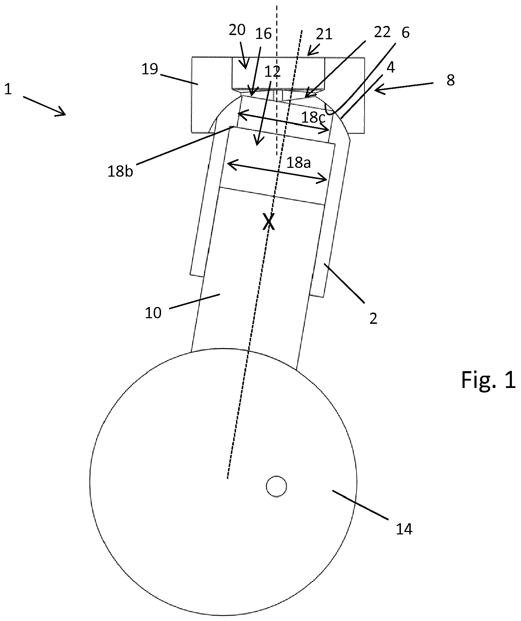

Figure 1 is a side sectional view of a rocking cylinder assembly 1 of a machine (such as an internal combustion engine), the assembly 1 comprising a cylinder 2 having a male, convex bearing surface 4 bearing against a female, concave bearing surface 6 of a bearing component 8. A piston 10 reciprocates within an internal bore 12 of the cylinder 2, and is driven by an eccentric 14 of a crankshaft via a piston foot of the piston 10 which engages the eccentric 14. The internal bore 12 extends along the length of the cylinder 2 and a first end of the internal bore 12 terminates at the cylinder bearing surface 4. A line of intersection between the cylinder bore 12 and the cylinder bearing surface 4 forms a first cylinder aperture 16 which defines a flow area through which fluid can flow into and/or out of the cylinder 2. A second end of the cylinder bore 12 terminates at a second cylinder aperture opposite the first end which receives the piston 10. The cylinder bore 12 has a first inner diameter 18a axially between the second cylinder aperture and a step 18b where the cylinder bore 12 steps down in diameter to a second inner diameter 18c axially between the step 18b and the first cylinder aperture 16. The first cylinder aperture 16 has an inner diameter which is equal to the second inner diameter 18c, while the second cylinder aperture has an inner diameter which is equal to the first inner diameter 18a.

It will be understood that the piston 10 (which has an outer diameter of just less than the first inner diameter 18a of the cylinder bore 12 but greater than the second inner diameter 18c of the cylinder bore 12) only reciprocates within the region of the internal bore 12 having the first inner diameter 18a. Typically, greater than 50% of the length of the bore 12, more typically greater than 70% of the length of the bore 12, and even more typically, greater than 80% of the length of the bore 12 is provided with the first inner diameter 18a.

The bearing component 8 has a body 19 comprising an internal bore 20 which extends from a first (typically circular) bearing component aperture 21 to the component bearing surface 6 where the bore 20 terminates. A line of intersection between the component bore 20 and the component bearing surface 6 forms a second aperture 22 opposite the first aperture 21 which defines a fluid flow area through which fluid flows through the bearing component 8 into or out from the cylinder 2.

The first cylinder aperture 16 defines a fluid flow path having a principal fluid flow axis (indicated by a dotted line in Figure 1) along which fluid flows through the first cylinder aperture 16 and the second component aperture 22 defines a fluid flow path having a principal fluid flow axis (indicated by a dashed line in Figure 1) along which fluid flows through the second component aperture 22.

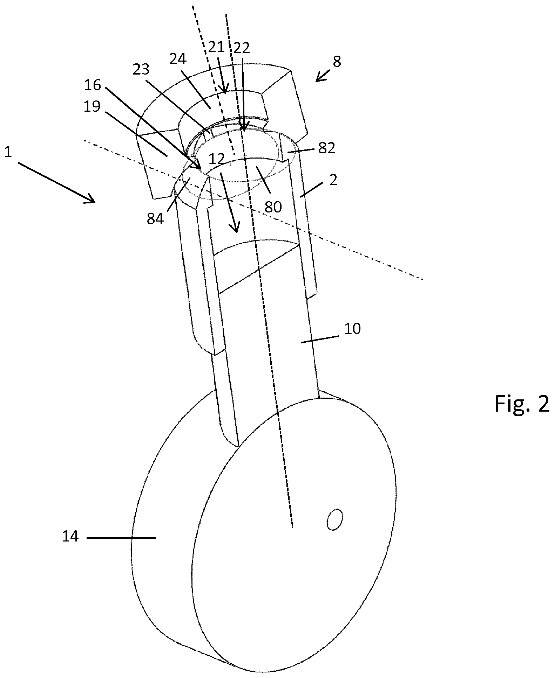

As the piston 10 reciprocates within the cylinder bore 12, the cylinder 2 rotates periodically about a rocking axis (the rocking axis extends out of and into the page as viewed in Figure 1 and is represented by an "X"; the rocking axis is also illustrated by the dashed line shown in Figure 2) between first and second end positions. At the first end position (see Figure 1), the cylinder 2 is rotated in a first rotational sense (clockwise in the view of Figure 1) about the rocking axis by a first extent from an intermediate third position mid-way between the first and second end positions. At the second end position, the cylinder 2 is rotated in a second rotational sense (e.g. anticlockwise) opposite the first rotational sense about the rocking axis by a second extent from the intermediate third position. Typically the first and second extents are equal (e.g. approximately 9° from the intermediate position) such that the second end position is in effect a mirror image of the first end position about the rocking axis. Alternatively, it may be that the second end position is not a mirror image of the first end position, for example the bearing component may be laterally offset from the cylinder 2 in a direction perpendicular to the principal fluid flow axis of the bearing component 8. The piston foot has a part-cylinder shape which constrains movement of the cylinder to rotation about the rocking axis. As the cylinder rotates between the first and second end positions, the first cylinder aperture 16 remains in fluid communication with the second component aperture 22 such that hydraulic fluid can flow along a fluid flow path extending through the apertures 16, 22.

It will be understood that the principal fluid flow axis of the cylinder aperture 16 rotates about the rocking axis with the cylinder 2, but the principal fluid flow axis of the component aperture 22 remains fixed relative to the rocking axis. Both principal fluid flow axes extend perpendicularly to the rocking axis as the cylinder 2 rotates between the first and second end positions.

The first cylinder aperture 16 lies on a single plane and has a circular shape. The diameter of the first cylinder aperture 16 is greater than the maximum extent of the second component aperture 22 such that there is no overlap/overrun between the cylinder bearing surface 6 and the second component aperture 22 as the cylinder 2 rotates between the first and second end positions. As the cylinder 2 rotates between the first and second end positions, the first cylinder aperture 16 remains in direct fluid communication with the second component aperture 22 such that fluid can flow along a fluid flow path extending through the first cylinder aperture 16 and the second component aperture 22.

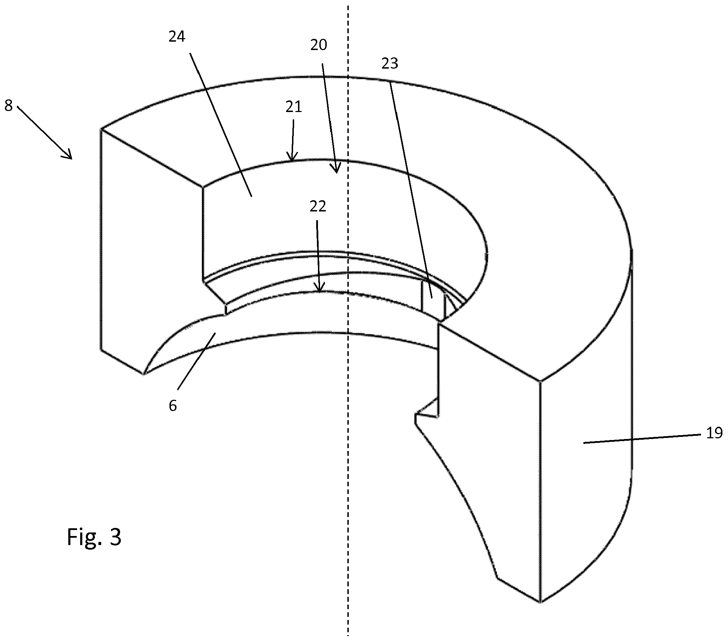

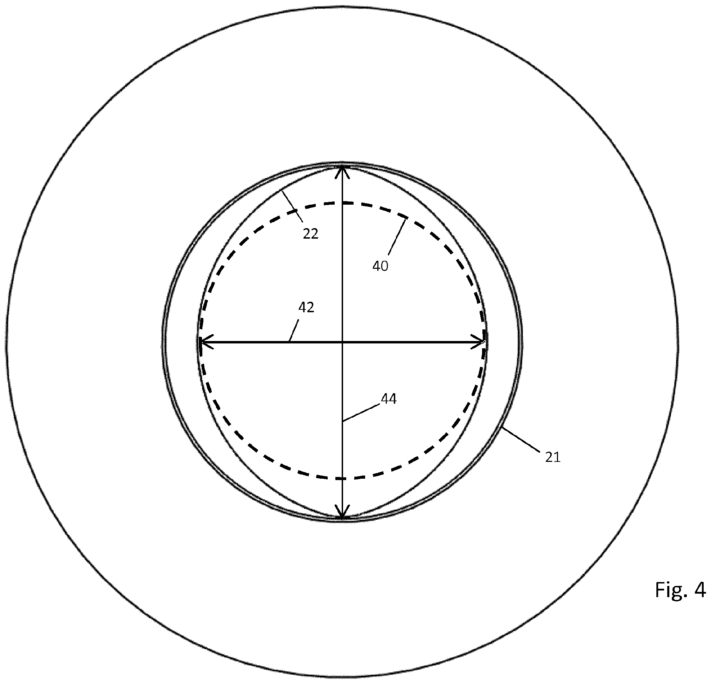

As shown most clearly in Figure 3, the second component aperture 22 does not lie on a single plane. Rather, the second component aperture 22 follows a curved path which conforms to the shape of the concave component bearing surface 6. The shape of the second component aperture 22 is shown in more detail in the top-down view of Figure 4 through the first aperture 21 of the component 8 along the principal fluid flow axis of the component aperture 22. More specifically, Figure 4 shows a projection of the second component aperture 22 along the principal fluid flow axis of the second component aperture 22 onto a plane perpendicular to the principal fluid flow axis of the second component aperture 22. Also shown in figure 4 is a notional circle 40 concentric and co-planar with the projection of the second component aperture 22 and having a diameter equal to, and being co-linear with, a line extending across the maximum extent of the component aperture 22 in a direction perpendicular to the rocking axis and perpendicular to the principal fluid flow axis of the component aperture 22 (e.g. horizontal or the direction 42 in Figure 4). The notional circle 40 represents a circular component aperture which would typically be used in place of the aperture 22.

It will be understood that references to the shape of the component aperture 22 are references to the shape of the said projection of the aperture 22 along its principal fluid flow axis onto a plane perpendicular to its principal fluid flow axis (i.e. the shape 22 shown in Figure 4), references to the area of the component aperture 22 are references to the area of the said projection, and references to the maximum extents of the component aperture 22 are references to the maximum extents of the said projection.

As overlap/overrun between the cylinder bearing surface 4 and the second component aperture 22 of the bearing component 8 is undesirable, the area of the first cylinder aperture 16 is typically required to be (significantly) larger than the area of the second aperture 22 of the bearing component 8. It is desirable to maximise the fluid flow area through the component aperture 22 in order to reduce pressure drop and increase the efficiency of the cylinder assembly 1 (and thus the machine comprising the cylinder assembly 1), but it is also desirable for the cylinder 2 and machine to be made as small as possible. These are typically considered to be conflicting design constraints because if the second aperture 22 (which is traditionally circular) is extended in size to increase the fluid flow area through the component aperture, the first cylinder aperture 16, and thus the machine comprising the cylinder assembly, would also need to be increased in size. However, it has been realised that different design constraints apply to the component aperture in directions parallel and perpendicular to the rocking axis respectively. More specifically, it has been realised that if the second component aperture 22 is increased in size in a direction parallel to the rocking axis (e.g. direction 44 in Figure 4) to increase the fluid flow area through the second component aperture 22, it is not necessary to increase the size of the first cylinder aperture 16 accordingly. This is because, when the cylinder 2 rotates about the rocking axis, the top-down projection of the cylinder aperture 16 along the principal fluid flow axis of the component aperture 22 extends beyond the notional circle 40 in the direction parallel to the rocking axis (e.g. direction 44 in Figure 4) across the full range of movement of the cylinder 2 about the rocking axis. The second component aperture 22 is therefore provided with a shape which extends beyond the notional circle 40 in this direction, thereby increasing the fluid flow area therethrough, and the cylinder aperture 16 does not have to be increased in size accordingly to prevent overlap/overrun between the cylinder bearing surface 4 and the second component aperture 22. More generally, the ratio of the area of the second component aperture 22 to the square of the maximum extent of the said component aperture 22 in a direction perpendicular to the rocking axis and perpendicular to the principal fluid flow axis of the component aperture 22 (e.g. horizontal direction or direction 42 in Figure 4) is greater than the ratio of the area of the first cylinder aperture 16 to the square of the maximum extent of the first cylinder aperture 16 in a direction perpendicular to the rocking axis and perpendicular to the principal fluid flow axis of the cylinder aperture 16. In the example illustrated in Figure 4, the shape of the second component aperture 22 is elongate in a direction parallel (e.g. direction 44 in Figure 4) to the rocking axis.

Referring back to Figures 1-3, the second component aperture 22 is provided in a non-axisymmetrical portion 23 of the component bore 20 which is non-axisymmetrical about the principal fluid flow axis along which fluid flows through the second component aperture 22. The length of the non-axisymmetrical portion 23 in a direction parallel to the principal fluid flow axis of the second component aperture 22 varies in accordance with a substantially parabolic (or saddle shaped) profile. The non-axisymmetrical portion extends between the aperture 22 and an axisymmetrical portion 24 which is axisymmetrical (typically circular in axial cross section) about the principal fluid flow axis of the component bore 20. The axisymmetrical portion 24 extends between the non-axisymmetrical portion 23 comprising the second component aperture 22 and the first component aperture 21, and is typically integrally formed with the non-axisymmetrical portion 23. The bore 20 undergoes a step-change in extent where the axisymmetrical portion 24 of the component bore 20 joins the non-axisymmetrical portion 23. The majority (typically over 50%, preferably over 60%, even more preferably over 70%) of the length of the axisymmetric portion 60 of the component bore 52 (i.e. the portion above the point where the axisymmetrical portion 24 meets the non-axisymmetrical portion 23) has a constant, non-tapered extent. Typically, the said majority of the axisymmetric portion 24 of the component bore 22 has a circular cross section perpendicular to the principal fluid flow axis along which fluid flows through the aperture 22 (said axis being represented by the dashed line in Figure 3).

Working fluid flowing through the rocking cylinder assembly 1 may be highly pressurised, and this pressurised fluid causes symmetrical deflection of the axisymmetrical portion 24 about the principal fluid flow axis along which fluid flows through the component aperture 22 (and is also thus loaded evenly) and the non-axisymmetrical portion 23 of the component bore 20 is deflected non-axisymmetrically about the principal fluid flow axis along which fluid flows through the component aperture 22 (and is thus loaded unevenly). In order to minimise this non-axisymmetrical deflection, the maximum length of the non-axisymmetrical portion 23 in a direction parallel to the principal fluid flow axis through which fluid flows through the component aperture 22 is typically less than the maximum length of the axisymmetrical portion 24 of the component in that direction (e.g. less than half of the length of the axisymmetrical portion of the component in that direction). By minimising the length of the non-axisymmetrical portion 23 in this direction relative to that of the axisymmetric region 24, the non-axisymmetrical deflection acting on the component 8 is correspondingly reduced. In the axisymmetric section, the stress caused by the pressure forces is characterised more as hoop stress rather than bending stress due to its symmetric (cylindrical) nature, hence the deflection due to pressure is minimised. Accordingly, maximising axisymmetric length minimises the overall defection of the component. Accordingly, there is typically no (or at least less) need for a shape retaining cross-brace to be provided in order to prevent deformation of the component aperture 22. It is advantageous not to include a cross brace which both increases manufacturing cost, and itself obscures part of the flow passage.

Although it is stated as being advantageous to increase the length (and thus the influence) of the axisymmetric region 24, this may not always be the case. For example, if the second inner diameter 18c of the cylinder bore 12 is non-axisymmetric about the longitudinal axis of the cylinder 2 (or about the principal fluid flow axis of the cylinder aperture 16), it is typically advantageous for the shape and orientation of the internal bore 20 of the component to (at least substantially) match the shape of the second inner diameter 18c of the cylinder bore 12. This is because any deformation of the second inner diameter 18c of the cylinder bore 12 will at least approximately match the deformation of the component bore 20, which typically leads to improved conformity between the cylinder and component bearing surfaces 4, 6 throughout an increased lifetime of the rocking cylinder assembly.

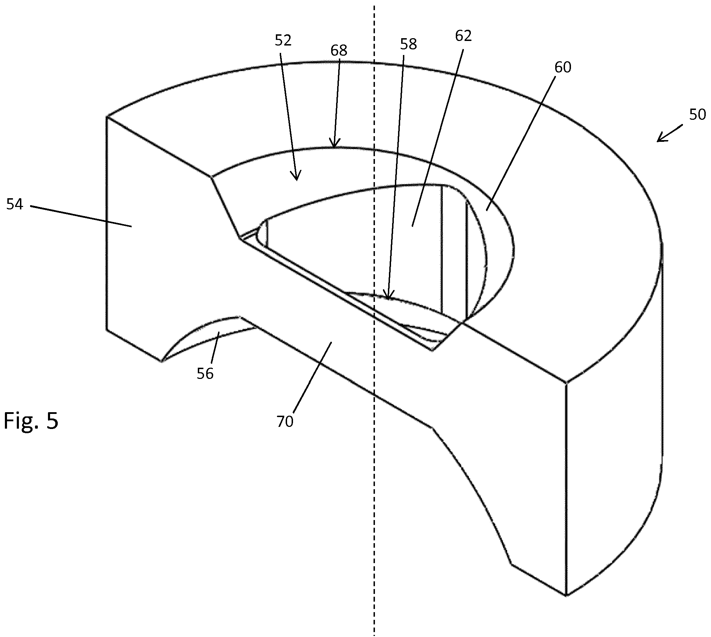

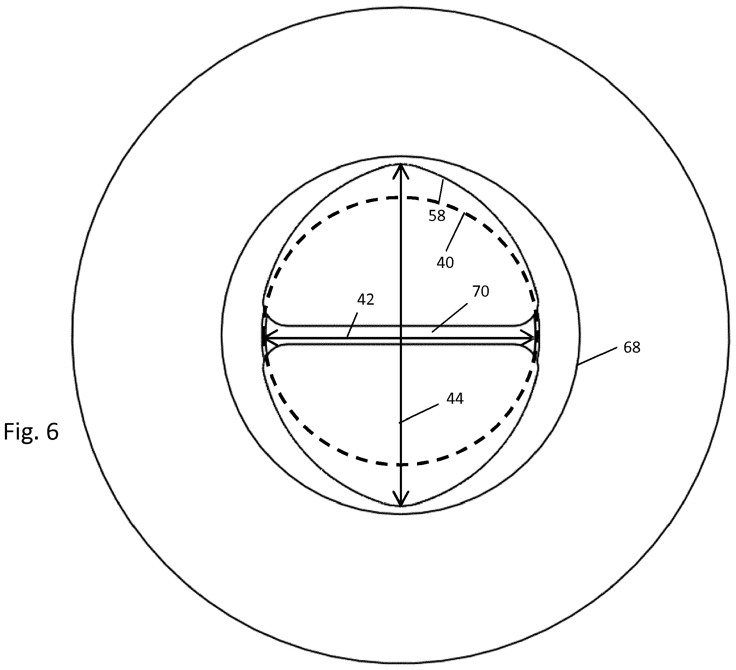

Figures 5 and 6 are sectional perspective and top-down (along a principal fluid flow axis) views of an alternative bearing component 50 which may be used in place of bearing component 8. The bearing component 50 comprises a component bore 52 extending through a body 54 and terminating at a concave component bearing surface 56. The line of intersection between the bore 52 and the bearing surface 56 forms a component aperture 58 through which fluid can flow through the bearing component 50. The component aperture 58 is provided with the same shape to the second component aperture 22 described above. Accordingly, as illustrated in Figure 6, which shows the projection of the component aperture 58 along the principal fluid flow axis of the aperture 58 onto a plane perpendicular to the said principal fluid flow axis, the shape of the aperture 58 extends beyond the notional circle 40 as described above with respect to the first (and preferred component) 8. In addition, the aperture 58 does not lie on a single plane. Rather the component aperture 58 follows a curved path which conforms to the concave profile of the bearing surface 56 of the component 50. The component aperture 58 defines a fluid flow path having a principal fluid flow axis (shown in dashed line in Figure 5) along which fluid can flow to/from the cylinder through the component 50.

The component aperture 58 is provided in a non-axisymmetrical portion 62 of the component bore 52 which is non-axisymmetrical about the principal fluid flow axis (indicated in dashed line in Figure 5) along which fluid flows through the component aperture 58. The component bore 52 further comprises an axisymmetrical portion 60 which is axisymmetrical about the principal fluid flow axis along which fluid flows through the component bore 52. The axisymmetrical portion 60 typically extends between the non-axisymmetrical portion 62 and a further component aperture 68 opposite the aperture 58 and is typically integrally formed with the non-axisymmetrical portion 62. However, unlike axisymmetric portion 24 of the component 8 described above, the axisymmetric portion 60 of the component bore 52 has a tapered extent (i.e. opposing inner walls of the axisymmetrical portion 60 diverge as they extend away from the non-axisymmetrical portion 62 towards the component aperture 68).

As explained above, working fluid flowing through the rocking cylinder assembly 1 may be highly pressurised, and this pressurised fluid causes loading of the components of the assembly 1, including the component bore 52. The axisymmetrical portion 60 of the component bore 52 is deflected symmetrically about the principal fluid flow axis along which fluid flows through the component aperture (and is thus loaded evenly). However, the non-axisymmetrical portion 62 of the component bore is deflected non-axisymmetrically about the principal fluid flow axis along which fluid flows through the component aperture 22 (and is thus loaded unevenly). Accordingly, as shown in Figures 5 and 6, a shape retaining cross-brace may extend across the second component aperture 22 in the direction 42 to help the aperture 22 to retain its shape in use. The cross-brace comprises a support arm 70 extending between opposing inner edges of the non-axisymmetric portion 62 (including the aperture 58) of the bore 52 in a direction perpendicular to the rocking axis and perpendicular to the principal fluid flow axis of the aperture 58. The cross-brace helps to prevent non-uniform deformation of the bore 52.

In order to maximise the flow area through the apertures 22, 58 of components 8, 50, the shapes of the apertures 22, 58 may conform to (typically at least approximate and may be identical to) a symmetric lens shape formed by the overlapping portion 80 (see Figure 2) of two notional intersecting ellipses 82, 84. The notional ellipses may be the respective top-down projections (as viewed along the principal fluid flow axis along which fluid flows through the aperture 22, 58) of the (tilted) first cylinder aperture 16 when the cylinder 2 is at the first and second end positions respectively. This is illustrated in Figure 2. In this case, the notional ellipses 82, 84 are the top-down projections along the principal fluid flow axis of the component aperture 22 of the tilted inner diameter of the first cylinder aperture 16 in the first and second end positions respectively. The shape of the component aperture 22 conforms to (and is indeed substantially identical to) the shape defined by the overlapping portion 80 of the ellipses 82, 84. As shown most clearly in Figures 1 to 3 with respect to the first bearing component 8, the shapes of the respective component apertures 22, 58 of the components 8, 50 conform to (and are typically substantially identical to) a boundary (typically a boundary covered by the first cylinder aperture 16 as the cylinder rotates between the first and second end positions) between an area of the component bearing surface 6, 56 swept by the cylinder bearing surface 4 as the cylinder 2 rotates between the first and second end positions and an area of the component bearing surface 6, 56 unswept by the cylinder bearing surface as the cylinder rotates between the first and second end positions.

It will be understood that, particularly when the cylinder aperture 16 is circular, any extension of the shape of the component apertures 22, 58 in a direction parallel to the rocking axis which increases the fluid flow area through the apertures 22, 58 beyond the notional circle 40 yields an increased fluid flow capacity through the component aperture compared to traditional circular apertures for the same size of cylinder 2.

In alternative embodiments, the bearing component 8, 50 may instead have a convex bearing surface, while the cylinder 2 may have a concave bearing surface. In this case, preferably (but not necessarily) the first cylinder aperture 16 may have the properties of the apertures 22, 58 of the components 8, 50 described above, while the component apertures 22, 58 may have the properties of the first cylinder aperture 16 of the cylinder 2 described above. In this case, the component aperture 22, 58 may have a larger area than the cylinder aperture 16.

Although the apertures 22, 58 are shown not to lie on a single plane, one or both of the apertures 22, 58 may alternatively lie on a single plane (i.e. the apertures 22, 58 may have two dimensional shapes).

## Claims

1. A rocking cylinder assembly (1) comprising: a cylinder (2) having a cylinder bore (12) terminating at a cylinder bearing surface (4) and a cylinder aperture (16) defined by a line of intersection between the cylinder bore (12) and the cylinder bearing surface (4), the cylinder (2) being rotatable about a rocking axis between first and second end positions; and a bearing component (8, 50) having a component bore (20, 52) terminating at a component bearing surface (6, 56) and a component aperture (22, 58) defined by a line of intersection between the component bore (20, 52) and the component bearing surface (6, 56), the cylinder bearing surface (4) bearing against the component bearing surface (6, 56) and the cylinder and component apertures (16, 22, 58) being in fluid communication as the cylinder (2) rotates between the first and second end positions, a first one of the cylinder and component apertures (16, 22, 58) having a greater area than the second one of the cylinder and component apertures (16, 22, 58), the first one of the cylinder and component apertures (16, 22, 58) defining a first fluid flow path having a first principal fluid flow axis along which fluid flows through the said first one of the apertures (16, 22, 58) and a second one of the cylinder and component apertures (16, 22, 58) defining a second fluid flow path having a second principal fluid flow axis along which fluid flows through the second one of the apertures (16, 22, 58), **characterised in that** the ratio of the area of the said second one of the apertures (16, 22, 58) to the square of the maximum extent of the said second one of the apertures (16, 22, 58) in a direction perpendicular to the rocking axis and perpendicular to the second principal fluid flow axis is greater than the ratio of the area of the said first one of the apertures (16, 22, 58) to the square of the maximum extent of the said first one of the apertures (16, 22, 58) in a direction perpendicular to the rocking axis and perpendicular to the first principal fluid flow axis, wherein the component bore (20, 52) comprises an axisymmetric portion (24, 60) which is axisymmetrical about the principal fluid flow axis along which fluid flows through the component aperture (22, 58) and a non-axisymmetric portion (23, 62) which is non-axisymmetric about the said principal fluid flow axis, the non-axisymmetric portion (23, 62) comprising the component aperture (22, 58), and wherein a maximum length of the non-axisymmetrical portion (23) of the component bore (20) in a direction parallel to the said principal fluid flow axis is less than a maximum length of the axisymmetrical portion (24) of the component bore (20, 52) **in that** direction.

2. A rocking cylinder assembly (1) according to claim 1 wherein the ratio of the maximum extent of the said second one of the apertures (16, 22, 58) in a direction parallel to the rocking axis to the maximum extent of the said second one of the apertures (16, 22, 58) in a direction perpendicular to the rocking axis and perpendicular to the second principal fluid flow axis is greater than the ratio of the maximum extent of the said first one of the apertures (16, 22, 58) in a direction parallel to the rocking axis to the maximum extent of the said first one of the apertures (16, 22, 58) in a direction perpendicular to the rocking axis and perpendicular to the first principal fluid flow axis.

3. A rocking cylinder assembly (1) according to any one preceding claim wherein one of the component bearing surface (6, 56) and the cylinder bearing surface (4) is substantially convex and the other of the component bearing surface (6, 56) and the cylinder bearing surface (4) is substantially concave.

4. A rocking cylinder assembly (1) according to claim 3 wherein the concave bearing surface (6, 56) terminates at the said second one of the said apertures (22, 58) and the convex bearing surface (4) terminates at the said first one of the said apertures (16).

5. A rocking cylinder assembly (1) according to any one preceding claim wherein, if the area of the cylinder aperture (16) is greater than the area of the component aperture (22, 58), the component aperture (22, 58) conforms to a boundary between an area of the component bearing surface (6, 56) swept by the cylinder bearing surface (4) as the cylinder (2) rotates between the first and second end positions and an area of the component bearing surface (6, 56) unswept by the cylinder bearing surface (4) as the cylinder (2) rotates between the first and second end positions or, if the area of the component aperture (22, 58) is greater than the area of the cylinder aperture (16), the cylinder aperture (16) conforms to a boundary between an area of the cylinder bearing surface (4) swept by the component bearing surface (6, 56) as the cylinder (2) rotates between the first and second end positions and an area of the cylinder bearing surface (4) unswept by the component bearing surface (6, 56) as the cylinder (2) rotates between the first and second end positions.

6. A rocking cylinder assembly (1) according to any one preceding claim wherein the said first one of the apertures (16) has a circular shape.

7. A rocking cylinder assembly (1) according to any one preceding claim wherein the shape of the second one of the apertures (22, 58) conforms to a shape comprising or consisting of the overlapping portion of two notional intersecting ellipses or wherein the shape of the second one of the apertures (22, 58) conforms to an elliptical, quasi-oval or vesica piscis shape.

8. A rocking cylinder assembly (1) according to claim 7 wherein, when the second one of the apertures conforms to a shape comprising or consisting of the overlapping portion of two notional intersecting ellipses, the overlapping portion of the two notional intersecting ellipses forms a symmetric lens shape.

9. A rocking cylinder assembly (1) according to any one preceding claim wherein a shape retaining cross-brace (70) extends between opposing portions of the said second one of the apertures (58).

10. A rocking cylinder assembly (1) according to any one preceding claim wherein a maximum length of the non-axisymmetrical portion (23) of the component bore (20) in a direction parallel to the said principal fluid flow axis is less than half of a maximum length of the axisymmetrical portion (24) of the component (8) in that direction.

11. A rocking cylinder assembly (1) according to any one preceding claim wherein at least a portion of the component bore (20, 52) has a cross sectional shape perpendicular to the principal fluid flow axis along which fluid flows through the component aperture (22, 58) and at least a portion of the cylinder bore (12) has a cross sectional shape perpendicular to the principal fluid flow axis along which fluid flows through the cylinder aperture (16), wherein the said cross sectional shape of the component bore (20, 52) substantially matches the cross sectional shape of the cylinder bore (12).

12. A rocking cylinder assembly (1) according to any one preceding claim wherein the component aperture (22, 58) is elongate in a direction parallel to the rocking axis.

13. A method of operating a rocking cylinder assembly (1) comprising: a cylinder (2) having a cylinder bore (12) terminating at a cylinder bearing surface (4) and a cylinder aperture (16) defined by a line of intersection between the cylinder bore (12) and the cylinder bearing surface (4), the cylinder (2) being rotatable about a rocking axis between first and second end positions; a bearing component (8, 50) having a component bore (20, 52) terminating at a component bearing surface (6, 56) and a component aperture (22, 58) defined by a line of intersection between the component bore (20, 52) and the component bearing surface (6, 56), a first one of the cylinder and component apertures (16, 22, 58) having a greater area than the second one of the cylinder and component apertures (16, 22, 58), the first one of the cylinder and component apertures (16, 22, 58) defining a first fluid flow path having a first principal fluid flow axis along which fluid flows through the said first one of the apertures (16, 22, 58) and a second one of the cylinder and component apertures (16, 22, 58) defining a second fluid flow path having a second principal fluid flow axis along which fluid flows through the second one of the apertures (16, 22, 58), the ratio of the area of the said second one of the apertures (16, 22, 58) to the square of the maximum extent of the said second one of the apertures (16, 22, 58) in a direction perpendicular to the rocking axis and perpendicular to the second principal fluid flow axis being greater than the ratio of the area of the said first one of the apertures (16, 22, 58) to the square of the maximum extent of the said first one of the apertures (16, 22, 58) in a direction perpendicular to the rocking axis and perpendicular to the first principal fluid flow axis, wherein the component bore (20, 52) comprises an axisymmetric portion (24, 60) which is axisymmetrical about the principal fluid flow axis along which fluid flows through the component aperture (22, 58) and a non-axisymmetric portion (23, 62) which is non-axisymmetric about the said principal fluid flow axis, the non-axisymmetric portion (23, 62) comprising the component aperture (22, 58), and wherein a maximum length of the non-axisymmetrical portion (23) of the component bore (20) in a direction parallel to the said principal fluid flow axis is less than a maximum length of the axisymmetrical portion (24) of the component bore (20, 52) in that direction, the method comprising: rotating the cylinder (2) between the first and second positions; bearing the cylinder bearing surface (4) against the component bearing surface (6, 56) as the cylinder (2) rotates between the first and second positions such that the cylinder and bearing component apertures (16, 22, 58) are in fluid communication as the cylinder (2) rotates between the first and second positions; and flowing fluid between the cylinder and bearing component apertures (16, 22, 58).

14. A bearing component (8, 50) for a rocking cylinder assembly (1) according to any one of claims 1 to 12, the bearing component (8, 50) comprising a bearing surface (6, 56) and a component bore (12, 52) terminating at the bearing surface (6, 56) such that a line of intersection between the bore (12, 52) and the bearing surface (6, 56) defines a component aperture (22, 58) through which fluid can flow, **characterised in that** the area of a projection of the aperture (22, 58) along a longitudinal axis of the component bore (20, 52) onto a plane perpendicular to the longitudinal axis extends beyond a notional circular area (40) being concentric and co-planar with the said projected aperture area, and having a diameter equal to the length of, and being co-linear with, the straight line of shortest length extending between opposing sides of the said projected aperture area through the centre of the said area, wherein the component bore (20, 52) comprises an axisymmetric portion (24, 60) which is axisymmetrical about the principal fluid flow axis along which fluid flows through the component aperture (22, 58) and a non-axisymmetric portion (23, 62) which is non-axisymmetric about the said principal fluid flow axis, the non-axisymmetric portion (23, 62) comprising the component aperture (22, 58), and wherein a maximum length of the non-axisymmetrical portion (23) of the component bore (20) in a direction parallel to the said principal fluid flow axis is less than a maximum length of the axisymmetrical portion (24) of the component bore (20, 52) **in that** direction.

## Patentansprüche

1. Oszillierende Zylinderanordnung (1), umfassend: einen Zylinder (2) mit einer Zylinderbohrung (12), die an einer Zylinderlagerfläche (4) endet, und einer Zylinderöffnung (16), die durch eine Schnittlinie zwischen der Zylinderbohrung (12) und der Zylinderlagerfläche (4) definiert ist, wobei der Zylinder (2) um eine Schwenkachse zwischen einer ersten und einer zweiten Endposition drehbar ist; und eine Lagerkomponente (8, 50) mit einer Komponentenbohrung (20, 52), die an einer Komponentenlagerfläche (6, 56) endet, und einer Komponentenöffnung (22, 58), die durch eine Schnittlinie zwischen der Komponentenbohrung (20, 52) und der Komponentenlagerfläche (6, 56) definiert ist, wobei die Zylinderlagerfläche (4) an der Komponentenlagerfläche (6, 56) anliegt und die Zylinder- und die Komponentenöffnung (16, 22, 58) in einer Fluidverbindung stehen, während sich der Zylinder (2) zwischen der ersten und der zweiten Endposition dreht, wobei eine erste aus der Zylinder- und der Komponentenöffnung (16, 22, 58) eine größere Fläche als die zweite aus der Zylinder- und der Komponentenöffnung (16, 22, 58) aufweist, wobei die erste aus der Zylinder- und der Komponentenöffnung (16, 22, 58) einen ersten Fluidströmungsweg mit einer ersten Hauptfluidströmungsachse, entlang der das Fluid durch die erste der Öffnungen (16, 22, 58) strömt, definiert, und eine zweite aus der Zylinder- und der Komponentenöffnung (16, 22, 58) einen zweiten Fluidströmungsweg mit einer zweiten Hauptfluidströmungsachse, entlang der Fluid durch die zweite der Öffnungen (16, 22, 58) strömt, definiert, **dadurch gekennzeichnet, dass** das Verhältnis der Fläche der zweiten der Öffnungen (16, 22, 58) zu dem Quadrat der maximalen Ausdehnung der zweiten der Öffnungen (16, 22, 58) in einer senkrecht zu der Schwenkachse und senkrecht zu der zweiten Hauptfluidströmungsachse verlaufenden Richtung größer als das Verhältnis der Fläche der ersten der Öffnungen (16, 22, 58) zu dem Quadrat der maximalen Ausdehnung der ersten der Öffnungen (16, 22, 58) in einer senkrecht zu der Schwenkachse und senkrecht zu der ersten Hauptfluidströmungsachse verlaufenden Richtung ist, wobei die Komponentenbohrung (20, 52) einen axialsymmetrischen Abschnitt (24, 60), der um die Hauptfluidströmungsachse, entlang der Fluid durch die Komponentenöffnung (22, 58) strömt, axialsymmetrisch ist, und einen nicht axialsymmetrischen Abschnitt (23, 62), der nicht um die Hauptfluidströmungsachse axialsymmetrisch ist, umfasst, wobei der nicht axialsymmetrische Abschnitt (23, 62) die Komponentenöffnung (22, 58) umfasst, und wobei eine maximale Länge des nicht axialsymmetrischen Abschnitts (23) der Komponentenbohrung (20) in einer zu der Hauptfluidströmungsachse parallel verlaufenden Richtung geringer als eine maximale Länge des axialsymmetrischen Abschnitts (24) der Komponentenbohrung (20, 52) in dieser Richtung ist.

2. Oszillierende Zylinderanordnung (1) nach Anspruch 1, wobei das Verhältnis der maximalen Ausdehnung der zweiten der Öffnungen (16, 22, 58) in einer parallel zu der Schwenkachse verlaufenden Richtung zu der maximalen Ausdehnung der zweiten der Öffnungen (16, 22, 58) in einer senkrecht zu der Schwenkachse und senkrecht zu der zweiten Hauptfluidströmungsachse verlaufenden Richtung größer als das Verhältnis der maximalen Ausdehnung der ersten der Öffnungen (16, 22, 58) in einer parallel zu der Schwenkachse verlaufenden Richtung zu der maximalen Ausdehnung der ersten der Öffnungen (16, 22, 58) in einer senkrecht zu der Schwenkachse und senkrecht zu der ersten Hauptfluidströmungsachse verlaufenden Richtung ist.

3. Oszillierende Zylinderanordnung (1) nach einem der vorhergehenden Ansprüche, wobei eine aus der Komponentenlagerfläche (6, 56) und der Zylinderlagerfläche (4) im Wesentlichen konvex ist, und die andere aus der Komponentenlagerfläche (6, 56) und der Zylinderlagerfläche (4) im Wesentlichen konkav ist.

4. Oszillierende Zylinderanordnung (1) nach Anspruch 3, wobei die konkave Lagerfläche (6, 56) an der zweiten der Öffnungen (22, 58) endet, und die konvexe Lagerfläche (4) an der ersten der Öffnungen (16) endet.

5. Oszillierende Zylinderanordnung (1) nach einem der vorhergehenden Ansprüche, wobei dann, wenn die Fläche der Zylinderöffnung (16) größer als die Fläche der Komponentenöffnung (22, 58) ist, die Komponentenöffnung (22, 58) mit einer Grenze zwischen einem durch die Zylinderlagerfläche (4) überstrichenen Bereich der Komponentenlagerfläche (6, 56), während sich der Zylinder (2) zwischen der ersten und der zweiten Endposition dreht, und einem nicht durch die Zylinderlagerfläche (4) überstrichenen Bereich der Komponentenlagerfläche (6, 56), während sich der Zylinder (2) zwischen der ersten und der zweiten Endposition dreht, übereinstimmt, oder dann, wenn die Fläche der Komponentenöffnung (22, 58) größer als die Fläche der Zylinderöffnung (16) ist, die Zylinderöffnung (16) mit einer Grenze zwischen einem durch die Komponentenlagerfläche (6, 56) überstrichenen Bereich der Zylinderlagerfläche (4), während sich der Zylinder (2) zwischen der ersten und der zweiten Endposition dreht, und einem nicht durch die Komponentenlagerfläche (6, 56) überstrichenen Bereich der Zylinderlagerfläche (4), während sich der Zylinder (2) zwischen der ersten und der zweiten Endposition dreht, übereinstimmt.

6. Oszillierende Zylinderanordnung (1) nach einem der vorhergehenden Ansprüche, wobei die erste der Öffnungen (16) eine runde Form aufweist.

7. Oszillierende Zylinderanordnung (1) nach einem der vorhergehenden Ansprüche, wobei die Form der zweiten der Öffnungen (22, 58) mit einer Form, die den überlappenden Abschnitt von zwei fiktiven einander schneidenden Ellipsen umfasst oder daraus besteht, übereinstimmt, oder wobei die Form der zweiten der Öffnungen (22, 58) mit einer elliptischen, einer quasi-ovalen oder einer Fischblasenform übereinstimmt.

8. Oszillierende Zylinderanordnung (1) nach Anspruch 7, wobei dann, wenn die zweite der Öffnungen mit einer Form, die den überlappenden Abschnitt von zwei fiktiven einander schneidenden Ellipsen umfasst oder daraus besteht, übereinstimmt, der überlappende Abschnitt der beiden fiktiven einander schneidenden Ellipsen eine symmetrische Linsenform bildet.

9. Oszillierende Zylinderanordnung (1) nach einem der vorhergehenden Ansprüche, wobei sich eine formhaltende Querstrebe (70) zwischen einander gegenüberliegenden Abschnitten der zweiten der Öffnungen (58) erstreckt.

10. Oszillierende Zylinderanordnung (1) nach einem der vorhergehenden Ansprüche, wobei eine maximale Länge des nicht axialsymmetrischen Abschnitts (23) der Komponentenbohrung (20) in einer parallel zu der Hauptfluidströmungsachse verlaufenden Richtung geringer als die Hälfte einer maximalen Länge des axialsymmetrischen Abschnitts (24) der Komponente (8) in dieser Richtung ist.

11. Oszillierende Zylinderanordnung (1) nach einem der vorhergehenden Ansprüche, wobei wenigstens ein Abschnitt der Komponentenbohrung (20, 52) eine zu der Hauptfluidströmungsachse, entlang der Fluid durch die Komponentenöffnung (22, 58) strömt, senkrechte Querschnittform aufweist, und wenigstens ein Abschnitt der Zylinderbohrung (12) eine zu der Hauptfluidströmungsachse, entlang der Fluid durch die Zylinderöffnung (16) strömt, senkrechte Querschnittform aufweist, wobei die Querschnittform der Komponentenbohrung (20, 52) im Wesentlichen der Querschnittform der Zylinderbohrung (12) entspricht.

12. Oszillierende Zylinderanordnung (1) nach einem der vorhergehenden Ansprüche, wobei die Komponentenöffnung (22, 58) in einer parallel zu der Schwenkachse verlaufenden Richtung länglich ist.

13. Verfahren zum Betreiben einer oszillierenden Zylinderanordnung (1), die einen Zylinder (2) mit einer Zylinderbohrung (12), die an einer Zylinderlagerfläche (4) endet, und einer Zylinderöffnung (16), die durch eine Schnittlinie zwischen der Zylinderbohrung (12) und der Zylinderlagerfläche (4) definiert ist, wobei der Zylinder (2) um eine Schwenkachse zwischen einer ersten und einer zweiten Endposition drehbar ist; eine Lagerkomponente (8, 50) mit einer Komponentenbohrung (20, 52), die an einer Komponentenlagerfläche (6, 56) endet, und einer Komponentenöffnung (22, 58), die durch eine Schnittlinie zwischen der Komponentenbohrung (20, 52) und der Komponentenlagerfläche (6, 56) definiert ist, umfasst, wobei eine erste aus der Zylinder- und der Komponentenöffnung (16, 22, 58) eine größere Fläche als die zweite aus der Zylinder- und der Komponentenöffnung (16, 22, 58) aufweist, wobei die erste aus der Zylinder- und der Komponentenöffnung (16, 22, 58) einen ersten Fluidströmungsweg mit einer ersten Hauptfluidströmungsachse, entlang der Fluid durch die erste der Öffnungen (16, 22, 58) strömt, definiert, und eine zweite aus der Zylinder- und der Komponentenöffnung (16, 22, 58) einen zweiten Fluidströmungsweg mit einer zweiten Hauptfluidströmungsachse, entlang der Fluid durch die zweite der Öffnungen (16, 22, 58) strömt, definiert, wobei das Verhältnis der Fläche der zweiten der Öffnungen (16, 22, 58) zu dem Quadrat der maximalen Ausdehnung der zweiten der Öffnungen (16, 22, 58) in einer senkrecht zu der Schwenkachse und senkrecht zu der zweiten Hauptfluidströmungsachse verlaufenden Richtung größer als das Verhältnis der Fläche der ersten der Öffnungen (16, 22, 58) zu dem Quadrat der maximalen Ausdehnung der ersten der Öffnungen (16, 22, 58) in einer senkrecht zu der Schwenkachse und senkrecht zu der ersten Hauptfluidströmungsachse verlaufenden Richtung ist, wobei die Komponentenbohrung (20, 52) einen axialsymmetrischen Abschnitt (24, 60), der um die Hauptfluidströmungsachse, entlang der Fluid durch die Komponentenöffnung (22, 58) strömt, axialsymmetrisch ist, und einen nicht axialsymmetrischen Abschnitt (23, 62), der nicht um die Hauptfluidströmungsachse axialsymmetrisch ist, umfasst, wobei der nicht axialsymmetrische Abschnitt (23, 62) die Komponentenöffnung (22, 58) umfasst, und wobei eine maximale Länge des nicht axialsymmetrischen Abschnitts (23) der Komponentenbohrung (20) in einer zu der Hauptfluidströmungsachse parallel verlaufenden Richtung geringer als eine maximale Länge des axialsymmetrischen Abschnitts (24) der Komponentenbohrung (20, 52) in dieser Richtung ist, wobei das Verfahren das Drehen des Zylinders (2) zwischen der ersten und der zweiten Position; das derartige Anliegen der Zylinderlagerfläche (4) an die Komponentenlagerfläche (6, 56), während sich der Zylinder (2) zwischen der ersten und der zweiten Position dreht, dass die Zylinder- und die Lagerkomponentenöffnung (16, 22, 58) in einer Fluidverbindung stehen, während sich der Zylinder (2) zwischen der ersten und der zweiten Position dreht; und das Strömen von Fluid zwischen der Zylinder- und der Lagerkomponentenöffnung (16, 22, 58) umfasst.

14. Lagerkomponente (8, 50) für eine oszillierende Zylinderanordnung (1) nach einem der Ansprüche 1 bis 12, wobei die Lagerkomponente (8, 50) eine Lagerfläche (6, 56) und eine Komponentenbohrung (12, 52), die so an der Lagerfläche (6, 56) endet, dass eine Schnittlinie zwischen der Bohrung (12, 52) und der Lagerfläche (6, 56) eine Komponentenöffnung (22, 58), durch die Fluid strömen kann, definiert, umfasst, **dadurch gekennzeichnet, dass** sich die Fläche einer Projektion der Öffnung (22, 58) entlang einer Längsachse der Komponentenbohrung (20, 52) auf eine senkrecht zu der Längsachse verlaufende Ebene über einen fiktiven runden Bereich (40), der mit der projizierten Öffnungsfläche konzentrisch und koplanar ist, hinaus erstreckt und einen Durchmesser aufweist, der der Länge der geraden Linie mit der kürzesten Länge, die sich zwischen gegenüberliegenden Seiten der projizierten Öffnungsfläche durch die Mitte der Fläche erstreckt, gleich ist und mit dieser Linie kolinear ist, wobei die Komponentenbohrung (20, 52) einen axialsymmetrischen Abschnitt (24, 60), der um die Hauptfluidströmungsachse, entlang der Fluid durch die Komponentenöffnung (22, 58) strömt, axialsymmetrisch ist, und einen nicht axialsymmetrischen Abschnitt (23, 62), der nicht um die Hauptfluidströmungsachse axialsymmetrisch ist, umfasst, wobei der nicht axialsymmetrische Abschnitt (23, 62) die Komponentenöffnung (22, 58) umfasst, und wobei eine maximale Länge des nicht axialsymmetrischen Abschnitts (23) der Komponentenbohrung (20) in einer zu der Hauptfluidströmungsachse parallel verlaufenden Richtung geringer als eine maximale Länge des axialsymmetrischen Abschnitts (24) der Komponentenbohrung (20, 52) in dieser Richtung ist.

## Revendications

1. Ensemble formant cylindre oscillant (1) comprenant : un cylindre (2) comportant un orifice de cylindre (12) se terminant au niveau d'une surface d'appui de cylindre (4) et une ouverture de cylindre (16) définie par une ligne d'intersection entre l'orifice de cylindre (12) et la surface d'appui de cylindre (4), le cylindre (2) étant apte à tourner autour d'un axe d'oscillation entre des première et seconde positions d'extrémité ; et un composant formant palier (8, 50) comportant un orifice de composant (20, 52) se terminant au niveau d'une surface d'appui de composant (6, 56) et une ouverture de composant (22, 58) définie par une ligne d'intersection entre l'orifice de composant (20, 52) et la surface d'appui de composant (6, 56), la surface d'appui de cylindre (4) étant en appui contre la surface d'appui de composant (6, 56) et les ouvertures de cylindre et de composant (16, 22, 58) étant en communication fluidique lorsque le cylindre (2) tourne entre les première et seconde positions d'extrémité, une première ouverture parmi les ouvertures de cylindre et de composant (16, 22, 58) présentant une aire plus grande que celle de la seconde ouverture parmi les ouvertures de cylindre et de composant (16, 22, 58), la première ouverture parmi les ouvertures de cylindre et de composant (16, 22, 58) définissant un premier trajet d'écoulement de fluide présentant un premier axe d'écoulement de fluide principal le long duquel s'écoule du fluide à travers ladite première ouverture parmi les ouvertures (16, 22, 58) et une seconde ouverture parmi les ouvertures de cylindre et de composant (16, 22, 58) définissant un second trajet d'écoulement de fluide présentant un second axe d'écoulement de fluide principal le long duquel s'écoule du fluide à travers la seconde ouverture parmi les ouvertures (16, 22, 58), **caractérisé en ce que** le rapport de l'aire de ladite seconde ouverture parmi les ouvertures (16, 22, 58) sur le carré de l'étendue maximale de ladite seconde ouverture parmi les ouvertures (16, 22, 58) dans une direction perpendiculaire à l'axe d'oscillation et perpendiculaire au second axe d'écoulement de fluide principal est supérieur au rapport de l'aire de ladite première ouverture parmi les ouvertures (16, 22, 58) sur le carré de l'étendue maximale de ladite première ouverture parmi les ouvertures (16, 22, 58) dans une direction perpendiculaire à l'axe d'oscillation et perpendiculaire au premier axe d'écoulement de fluide principal, l'orifice de composant (20, 52) comprenant une partie axisymétrique (24, 60) qui est axisymétrique autour de l'axe d'écoulement de fluide principal le long duquel s'écoule du fluide à travers l'ouverture de composant (22, 58) et une partie non axisymétrique (23, 62) qui est non axisymétrique autour dudit axe d'écoulement de fluide principal, la partie non axisymétrique (23, 62) comprenant l'ouverture de composant (22, 58), et une longueur maximale de la partie non axisymétrique (23) de l'orifice de composant (20) dans une direction parallèle audit axe d'écoulement de fluide principal étant inférieure à une longueur maximale de la partie axisymétrique (24) de l'orifice de composant (20, 52) dans cette direction.

2. Ensemble formant cylindre oscillant (1) selon la revendication 1, dans lequel le rapport de l'étendue maximale de ladite seconde ouverture parmi les ouvertures (16, 22, 58) dans une direction parallèle à l'axe d'oscillation sur l'étendue maximale de ladite seconde ouverture parmi les ouvertures (16, 22, 58) dans une direction perpendiculaire à l'axe d'oscillation et perpendiculaire au second axe d'écoulement de fluide principal est supérieur au rapport de l'étendue maximale de ladite première ouverture parmi les ouvertures (16, 22, 58) dans une direction parallèle à l'axe d'oscillation sur l'étendue maximale de ladite première ouverture parmi les ouvertures (16, 22, 58) dans une direction perpendiculaire à l'axe d'oscillation et perpendiculaire au premier axe d'écoulement de fluide principal.

3. Ensemble formant cylindre oscillant (1) selon l'une quelconque des revendications précédentes, dans lequel une surface parmi la surface d'appui de composant (6, 56) et la surface d'appui de cylindre (4) est essentiellement convexe et l'autre surface parmi la surface d'appui de composant (6, 56) et la surface d'appui de cylindre (4) est essentiellement concave.

4. Ensemble formant cylindre oscillant (1) selon la revendication 3, dans lequel la surface d'appui (6, 56) concave se termine au niveau de ladite seconde ouverture parmi lesdites ouvertures (22, 58) et la surface d'appui (4) convexe se termine au niveau de ladite première ouverture parmi lesdites ouvertures (16).

5. Ensemble formant cylindre oscillant (1) selon l'une quelconque des revendications précédentes, dans lequel, si l'aire de l'ouverture de cylindre (16) est supérieure à l'aire de l'ouverture de composant (22, 58), l'ouverture de composant (22, 58) suit une limite entre une région de la surface d'appui de composant (6, 56) balayée par la surface d'appui de cylindre (4) lorsque le cylindre (2) tourne entre les première et seconde positions d'extrémité et une région de la surface d'appui de composant (6, 56) non balayée par la surface d'appui de cylindre (4) lorsque le cylindre (2) tourne entre les première et seconde positions d'extrémité ou, si l'aire de l'ouverture de composant (22, 58) est supérieure à l'aire de l'ouverture de cylindre (16), l'ouverture de cylindre (16) suit une limite entre une région de la surface d'appui de cylindre (4) balayée par la surface d'appui de composant (6, 56) lorsque le cylindre (2) tourne entre les première et seconde positions d'extrémité et une région de la surface d'appui de cylindre (4) non balayée par la surface d'appui de composant (6, 56) lorsque le cylindre (2) tourne entre les première et seconde positions d'extrémité.

6. Ensemble formant cylindre oscillant (1) selon l'une quelconque des revendications précédentes, dans lequel ladite première ouverture parmi les ouvertures (16) présente une forme circulaire.

7. Ensemble formant cylindre oscillant (1) selon l'une quelconque des revendications précédentes, dans lequel la forme de la seconde ouverture parmi les ouvertures (22, 58) suit une forme comprenant ou constituée de la partie superposée de deux ellipses notionnelles s'intersectant ou dans lequel la forme de la seconde ouverture parmi les ouvertures (22, 58) suit une forme elliptique, quasi-ovale ou de vesica piscis.

8. Ensemble formant cylindre oscillant (1) selon la revendication 7, dans lequel, lorsque la seconde ouverture parmi les ouvertures suit une forme comprenant ou constituée de la partie superposée de deux ellipses notionnelles s'intersectant, la partie superposée des deux ellipses notionnelles s'intersectant définit une forme lenticulaire symétrique.

9. Ensemble formant cylindre oscillant (1) selon l'une quelconque des revendications précédentes, dans lequel un renfort transversal de retenue de forme (70) s'étend entre des parties opposées de ladite seconde ouverture parmi les ouvertures (58).

10. Ensemble formant cylindre oscillant (1) selon l'une quelconque des revendications précédentes, dans lequel une longueur maximale de la partie non axisymétrique (23) de l'orifice de composant (20) dans une direction parallèle audit axe d'écoulement de fluide principal est inférieure à la moitié d'une longueur maximale de la partie axisymétrique (24) du composant (8) dans cette direction.

11. Ensemble formant cylindre oscillant (1) selon l'une quelconque des revendications précédentes, dans lequel au moins une partie de l'orifice de composant (20, 52) présente une forme en section transversale perpendiculaire à l'axe d'écoulement de fluide principal le long duquel s'écoule du fluide à travers l'ouverture de composant (22, 58) et au moins une partie de l'orifice de cylindre (12) présente une forme en section transversale perpendiculaire à l'axe d'écoulement de fluide principal le long duquel s'écoule du fluide à travers l'ouverture de cylindre (16), dans lequel ladite forme en section transversale de l'orifice de composant (20, 52) correspond essentiellement à la forme en section transversale de l'orifice de cylindre (12).

12. Ensemble formant cylindre oscillant (1) selon l'une quelconque des revendications précédentes, dans lequel l'ouverture de composant (22, 58) est allongée dans une direction parallèle à l'axe d'oscillation.

13. Procédé de mise en oeuvre d'un ensemble formant cylindre oscillant (1) comprenant : un cylindre (2) comportant un orifice de cylindre (12) se terminant au niveau d'une surface d'appui de cylindre (4) et une ouverture de cylindre (16) définie par une ligne d'intersection entre l'orifice de cylindre (12) et la surface d'appui de cylindre (4), le cylindre (2) étant apte à tourner autour d'un axe d'oscillation entre des première et seconde positions d'extrémité ; un composant formant palier (8, 50) comportant un orifice de composant (20, 52) se terminant au niveau d'une surface d'appui de composant (6, 56) et une ouverture de composant (22, 58) définie par une ligne d'intersection entre l'orifice de composant (20, 52) et la surface d'appui de composant (6, 56), une première ouverture parmi les ouvertures de cylindre et de composant (16, 22, 58) présentant une aire plus grande que celle de la seconde ouverture parmi les ouvertures de cylindre et de composant (16, 22, 58), la première ouverture parmi les ouvertures de cylindre et de composant (16, 22, 58) définissant un premier trajet d'écoulement de fluide présentant un premier axe d'écoulement de fluide principal le long duquel s'écoule du fluide à travers ladite première ouverture parmi les ouvertures (16, 22, 58) et une seconde ouverture parmi les ouvertures de cylindre et de composant (16, 22, 58) définissant un second trajet d'écoulement de fluide présentant un second axe d'écoulement de fluide principal le long duquel s'écoule du fluide à travers la seconde ouverture parmi les ouvertures (16, 22, 58), le rapport de l'aire de ladite seconde ouverture parmi les ouvertures (16, 22, 58) sur le carré de l'étendue maximale de ladite seconde ouverture parmi les ouvertures (16, 22, 58) dans une direction perpendiculaire à l'axe d'oscillation et perpendiculaire au second axe d'écoulement de fluide principal étant supérieur au rapport de l'aire de ladite première ouverture parmi les ouvertures (16, 22, 58) sur le carré de l'étendue maximale de ladite première ouverture parmi les ouvertures (16, 22, 58) dans une direction perpendiculaire à l'axe d'oscillation et perpendiculaire au premier axe d'écoulement de fluide principal, l'orifice de composant (20, 52) comprenant une partie axisymétrique (24, 60) qui est axisymétrique autour de l'axe d'écoulement de fluide principal le long duquel s'écoule du fluide à travers l'ouverture de composant (22, 58) et une partie non axisymétrique (23, 62) qui est non axisymétrique autour dudit axe d'écoulement de fluide principal, la partie non axisymétrique (23, 62) comprenant l'ouverture de composant (22, 58), et une longueur maximale de la partie non axisymétrique (23) de l'orifice de composant (20) dans une direction parallèle audit axe d'écoulement de fluide principal étant inférieure à une longueur maximale de la partie axisymétrique (24) de l'orifice de composant (20, 52) dans cette direction, le procédé comprenant : faire tourner le cylindre (2) entre les première et seconde positions ; mettre la surface d'appui de cylindre (4) en appui contre la surface d'appui de composant (6, 56) lorsque le cylindre (2) tourne entre les première et seconde positions de telle sorte que les ouvertures de cylindre et de composant formant palier (16, 22, 58) soient en communication fluidique lorsque le cylindre (2) tourne entre les première et seconde positions ; et faire s'écouler du fluide entre les ouvertures de cylindre et de composant formant palier (16, 22, 58).

14. Composant formant palier (8, 50) pour un ensemble formant cylindre oscillant (1) selon l'une quelconque des revendications 1 à 12, le composant formant palier (8, 50) comprenant une surface d'appui (6, 56) et un orifice de composant (12, 52) se terminant au niveau de la surface d'appui (6, 56) de telle sorte qu'une ligne d'intersection entre l'orifice (12, 52) et la surface d'appui (6, 56) définisse une ouverture de composant (22, 58) à travers laquelle peut s'écouler du fluide, **caractérisé en ce que** l'aire d'une projection de l'ouverture (22, 58) le long d'un axe longitudinal de l'orifice de composant (20, 52) sur un plan perpendiculaire à l'axe longitudinal s'étend au-delà d'une aire circulaire notionnelle (40) concentrique et coplanaire vis-à-vis de ladite aire d'ouverture projetée, et présentant un diamètre égal à la longueur, et colinéaire vis-à-vis de la ligne droite présentant la plus courte longueur s'étendant entre des côtés opposés de ladite aire d'ouverture projetée à travers le centre de ladite aire, l'orifice de composant (20, 52) comprenant une partie axisymétrique (24, 60) qui est axisymétrique autour de l'axe d'écoulement de fluide principal le long duquel s'écoule du fluide à travers l'ouverture de composant (22, 58) et une partie non axisymétrique (23, 62) qui est non axisymétrique autour dudit axe d'écoulement de fluide principal, la partie non axisymétrique (23, 62) comprenant l'ouverture de composant (22, 58), et une longueur maximale de la partie non axisymétrique (23) de l'orifice de composant (20) dans une direction parallèle audit axe d'écoulement de fluide principal étant inférieure à une longueur maximale de la partie axisymétrique (24) de l'orifice de composant (20, 52) dans cette direction.
